# EUROPÄISCHE PATENTSCHRIFT

(11) **EP 2 188 033 B1**
(45) Veröffentlichungstag und Bekanntmachung des Hinweises auf die Patenterteilung: **04.06.2014**
(21) Anmeldenummer: 08786747.9
(22) Anmeldetag: 01.08.2008
(51) Int. Cl.: B01D 46/24, B01D 46/52, B01D 46/00

(54) **FILTEREINRICHTUNG**
FILTER DEVICE
DISPOSITIF DE FILTRATION

(30) Priorität: 08.08.2007 DE 202007011099 U
(43) Veröffentlichungstag der Anmeldung: 26.05.2010
(73) Patentinhaber: Mann + Hummel GmbH, 71638 Ludwigsburg (DE)
(72) Erfinder: WALZ, Stefan, 71691 Freiberg (DE); STEINER, Sigfrid, 76327 Pfinztal (DE); KOSICKI, Jürgen, 74391 Erligheim (DE); WENZ, Berthold, 74343 Sachsenheim (DE)
(86) Internationale Anmeldenummer: PCT/EP2008/060127
(87) Internationale Veröffentlichungsnummer: WO 2009/019212

(56) Entgegenhaltungen:
- EP-A1- 0 624 340
- WO-A-2007/062715
- DE-U1-202006 003 137
- FR-A- 1 288 229
- GB-A- 456 468
- US-A- 5 888 260
- US-A- 5 902 365

## Beschreibung

### Technisches Gebiet

Die Erfindung betrifft eine Filtereinrichtung, wie zum Beispiel zur Filterung von Verbrennungsluft in Brennkraftmaschinen oder von Luft für den Fahrzeuginnenraum.

### Stand der Technik

Insbesondere im Kraftfahrzeugbereich ist es notwendig, die zur Verbrennung von Kraftstoffen benötigte Luft vor der Zuführung in die Brennkraftmaschine zu reinigen. Dies erfolgt in der Regel durch Luftfilter, welche im Verbrennungsluftansaugrohr verbaut sind. Dabei ist es oft wegen begrenzter räumlicher Ressourcen gewünscht, eine besonders kompakte Anordnung zu schaffen. Ferner soll ein Austausch von verschmutzten Filtern leicht möglich sein. In der Vergangenheit wurden dazu im Wesentlichen starre Filterelemente aus Faltenpacks in einem passenden Filtergehäuse vorgesehen. Üblicherweise sind derartige Faltenpacks quaderförmig oder in der Art eines Zylinders ausgeführt. Die DE 20 2004 003 326 U1 offenbart zum Beispiel ein entsprechendes Filterelement.

Nachteilig ist dabei zum Beispiel der aufwändige Einbau und Austausch entsprechender Filterelemente, da es zwischen kopf- und fußseitigen Endscheiben des Zylinders eingeklemmt werden muss. Gewünscht sind ferner leichte und aus wenigen Bestandteilen aufgebaute Filter, um die Herstellungskosten zu senken. Dennoch ist eine ausreichende Stabilität insbesondere des Filtermaterials erforderlich, damit beim Durchfluss des zu filternden Mediums keine Verformung auftritt und die Filterung behindert.

Aus der WO 2007/062715 A1 ein flexibler Schlauchfilter, der in einem rohrförmigen Gehäuse aufgenommen ist, bekannt. Der Schlauchfilter weist sowohl Längsfalten als auch Querfalten auf. Die US 5 902 365 A offenbart einen rohrförmigen Filtermantel aus Kunststoff mit einem eingeklebten länglichen Filterelement.

Ausgehend von dem flexiblen Schlauchfilter nach der WO 2007/062715 A1 ist es eine Aufgabe der vorliegenden Erfindung, die Wartungsfreundlichkeit der variabel verbaubaren Filtereinrichtung zu verbessern.

### Offenbarung der Erfindung

Diese Aufgabe wird durch ein Filterelement mit den Merkmalen des Patentanspruchs 1 gelöst.

Demgemäß ist eine Filtervorrichtung vorgesehen mit einem als Fluidleitung geeigneten rohrförmigen Filtermantel. Der Filtermantel weist zumindest eine Eintrittsöffnung für zu filterndes Rohfluid und eine Austrittsöffnung für gefiltertes Reinfluid auf. Dabei trennt in dem Innenraum des Filtermantels eine Grenzfläche aus einem flexiblen Filtermaterial einen Rohfluidbereich von einem Reinfluidbereich. Die Grenzfläche ist dabei derart ausgestaltet, dass das Rohfluid beim Durchströmen der Filtereinrichtung zumindest teilweise radial aus dem Rohfluidbereich in den Reinfluidbereich tritt.

Insbesondere bei einer Ausführung aus Kunststoff kann der rohrförmige Filtermantel gleichzeitig als Verpackung für die Filtereinrichtung bzw. die im Inneren vorliegenden Filtermaterialien verwendet werden. Dabei kann vorteilhafter Weise die Filtereinrichtung derart mit Kopplungsmitteln an einem Eintrittsabschnitt und einem Austrittsabschnitt des Filtermantels ausgestattet sein, um die Filtereinrichtung mit weiteren Fluidleitungen eines Fluidleitsystems zu verbinden. Dabei sind insbesondere als Kopplungsmittel Schnallen, Schnappverschlüsse, Gewinde, Bajonettverschlüsse, Steckverbinder mit Haftschluss und/oder den Filtermantel umlaufende Dichtungsringe an den Eintritts- bzw. Austrittsabschnitten denkbar.

Ferner kann die Filtereinrichtung mit abnehmbaren Deckeln an der Eintritts- und/oder Austrittsöffnung versehen sein. Dann dient der Filtermantel mit den Stopfen oder Deckeln gleichzeitig als stabile Verpackung des innenliegenden Filtermaterials, welches in der Form eines Filterelementes ausgeführt sein kann. Durch Verbindungsmittel in der Nähe der Eintritts- und Austrittsöffnung am Filtermantel ist in der Art eines rohrförmigen Gehäuses des Filtermantels eine Anbindung an das Luftansaugsystem eines Kraftfahrzeugs einfach möglich.

Durch die Erfindung wird eine einzelne Einheit aus Fluidführung in Form des Filtermantels sowie das eigentliche Filtermaterial im Inneren integriert bereitgestellt. Auch eine Abdichtung gegenüber weiteren Rohren zur Luftleitung, wird bereits durch die Filtereinrichtung, beispielsweise durch umlaufende Dichtringe an den Anschlussstellen geschaffen. Es ist auch einfacher, bereits bei der Fertigung einer entsprechenden Filtereinrichtung eine Abdichtung im Inneren des Filtermantels zwischen der Mantelfläche und dem flexiblen Filtermaterial zu schaffen, als später die Elemente beim Einbau zusammen zu führen.

Als Filtermaterial eignet sich insbesondere flexibles Vliesmaterial, zum Beispiel aus synthetischen Kunststofffasern. Das Filtermaterial kann zudem imprägniert sein oder mit weiteren Hilfsstoffen zur Filterung, wie mit Aktivkohlepartikeln, ausgestattet sein.

Die Grenzfläche kann vielfältig an die jeweilige Filteranwendung angepasst werden. Im Folgenden seien erfindungsgemäße Ausführungen für die Grenzfläche im Inneren des Filtermantels genannt:
- Die Grenzfläche ist schlauchförmig innerhalb des Filtermantels ausgeführt.
- Die Grenzfläche bildet den Rohfluidbereich mit einer Längsausdehnung und einer Querausdehnung aus einem fluiddurchlässigen Filtermaterial, wobei der Rohfluidbereich durch mehrfache Querfaltungen des Filtermaterials in zumindest der Längenausdehnung reversibel stauch- und/oder streckbar ist. Die Querfaltungen sind dabei in einem nicht verschwindenden Winkel zu der Längenausdehnungsrichtung ausgebildet.

Die Grenzfläche ist vorzugsweise derart in einem Abstand von der Eintrittsöffnung angeordnet, dass aus dem Rohfluid gefilterte Partikel innerhalb des Filtermantels verbleiben. Dadurch wird eine Verschmutzung der Ansaugrohre, also auf der Reinluftseite des Filters, praktisch verhindert. Akkumuliertes Schmutzmaterial verbleibt auch beim Austausch der Filtereinrichtung, wenn diese vollständig belegt ist, innerhalb des Rohres.

Zur Stützung von Faltungen des Filtermaterials können Fixiermittel, wie zum Beispiel Klammern oder im Wesentlichen senkrecht zu Faltungen verlaufende Leimfäden, vorgesehen sein. Ferner kann die Form der Grenzflächen und /oder Faltungen durch Stützmittel stabilisiert sein. Dies kann beispielsweise in der Art eines Gerüstes erfolgen, das im Inneren oder Äußeren um oder an der Grenzfläche angeordnet ist.

Weitere vorteilhafte Ausgestaltungen der Erfindung sind Gegenstand der Unteransprüche sowie der im Folgenden beschriebenen Ausführungsbeispiele.

### Kurze Beschreibung der Zeichnungen

Im Folgenden wird die Erfindung anhand verschiedener Varianten unter Bezugnahme auf die beigelegten Figuren näher erläutert. Es zeigt dabei:
- Fig, 1: eine perspektivische Darstellung einer ersten Variante einer Filtereinrichtung;
- Fig. 2: eine Längsschnittdarstellung einer zweiten Variante einer Filtereinrichtung;
- Fig. 3: eine perspektivische Darstellung einer dritten Variante einer Filtereinrichtung;
- Fig. 4: eine perspektivische Darstellung einer erfindungsgenmäßen Variante einer Filtereinrichtung;
- Fig. 5: Ausführungsbeispiele für Kopplungseinrichtungen an einer Ein- oder Austrittsöffnung einer Filtereinrichtung.

In den Figuren sind gleiche oder funktionsgleiche Elemente mit denselben Bezugszeichen versehen worden, sofern nichts anderes angegeben ist.

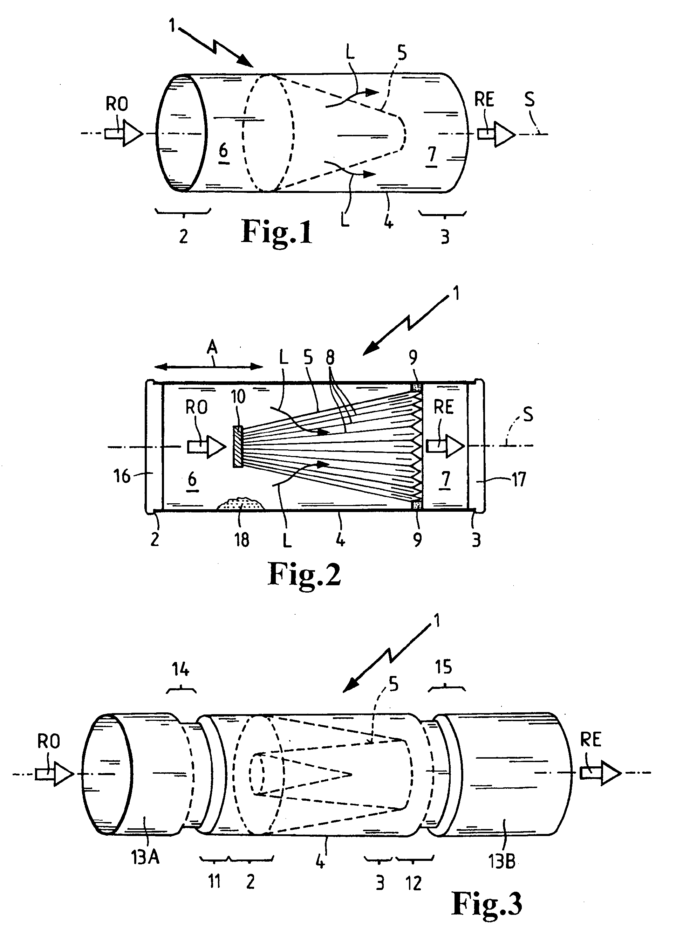

In der Figur 1 ist eine perspektivische Darstellung einer Filtereinrichtung 1 dargestellt. Dabei umfasst die Filtereinrichtung 1 einen rohrförmigen Filtermantel 4, der beispielsweise aus Kunststoff oder einem geeigneten Material zur Fluidleitung ausgeführt ist. Vorzugsweise ist dabei das Material für den Filtermantel 4 aus demselben Material wie beispielsweise in einem Kraftfahrzeug die Luftleitungen der Ansaugluft für den Verbrennungsmotor ausgeführt. Obwohl in der Figur 1 eine zylinderförmige rohrförmige Darstellung angegeben ist, kann der Filtermantel auch eine Biegung oder geeignete Biegungen zum Einbau als Luftleiter in einem Kraftfahrzeug ausgeführt werden. Auch kann der Filtermantel Querschnittsveränderungen über die Baufänge aufweisen

Die Filtereinrichtung 1 bzw. der Filtermantel 4 weist eine Eintrittsöffnung 2 auf, durch die Rohluft RO in den inneren Rohluftbereich 6 in den Innenraum des Mantels 4 eintreten kann. An einem distalen Ende entlang der Symmetrieachse S des Filtermantels 4 ist eine Austrittsöffnung 3 vorgesehen, durch die gereinigte also Reinluft RE austritt.

In der Figur 1 ist eine Strömungsrichtung von links nach rechts durch die Filtereinrichtung 1 angenommen. Im Inneren des Filtermantels 4 ist der Rohluftbereich 6 von einem Reinluftbereich 7 durch eine Grenzfläche 5 aus Filtermaterial wie beispielsweise geeignetem Filtervlies, getrennt. Eine beispielhafte kegelstumpfartige Form des Filtermaterials ist in der Figur 1 gestrichelt im Inneren des Filtermantels 4 dargestellt. Dabei weist die Grundfläche des Kegelstumpfes aus Filtermaterial denselben Querschnitt wie der rohrförmige Mantel 4 der Filtereinrichtung 1 auf. Entlang der Strömungsrichtung verjüngt sich zur Spitze bzw. Deckfläche des Kegelstumpfes die Grenzfläche. Die Grenzfläche 5 wird dabei im Wesentlichen radial von Luft durchströmt, wie es durch die Pfeile L angedeutet ist.

Das Gehäuseteil bzw. der Filtermantel 4 kann als kostengünstiges Blasteil hergestellt werden, wobei in einem weiteren Verarbeitungsschritt das Filterelement, also die Grenzfläche aus Filtermaterial, unlösbar daran angebracht wird. Dies kann durch Schweißen oder Kleben an die Gehäusewandung erfolgen. Es ist auch vorstellbar, dass der Filtermantel im Spritzgussverfahren hergestellt wird und gleichzeitig das Filtermaterial mit eingespritzt wird.

In der Figur 2 ist eine zweite Ausführungsform einer Filtereinrichtung 1 im Längsschnitt dargestellt. Die beiden Rohrenden bzw. die Eintrittsöffnung 2 und die Austrittsöffnung 3 des Filtermantels 4 sind dabei für Lagerzwecke mit Stopfen oder Deckeln 16, 17 verschlossen. Im Lagerzustand ist das Filtermaterial 50 gegenüber Verschmutzung geschützt. Durch die Ausführung als Einheit aus Filtergehäuse bzw. Filtermantel 4, welcher als Luftleiter verwendbar ist, mit dem eigentlichen Filterelement bzw. der Grenzfläche 5 aus einem geeigneten Filtermaterial zur Trennung des Rohluftbereiches 6 von dem Reinluftbereich 7 ist ein einfacher schneller Austausch möglich.

Das Filterelement bzw. die Grenzfläche 5 ist im Beispiel der Figur 2 aus einem längsgefalteten Filtervliesmaterial gefertigt. Dabei wird durch die zickzackförmige Faltung eine große Filteroberfläche erzielt. Der aus dem Faltenmaterial gebildete Kegelstumpf ist im Vergleich zu der Ausführungsform der Figur 1 entgegengesetzt angeordnet. Das heißt, die Basisfläche des Kegelstumpfes ist in Richtung zur Austrittsöffnung 3 beispielsweise durch einen umlaufenden inneren Dichtring 9 im Inneren der Filtereinrichtung 1 befestigt. Die Dichtung kann zum Beispiel aus geschäumtem Kunststoffmaterial luftdicht ausgeführt sein. Die Längsfalten 8 des Filtermaterials 5 verdichten sich in Richtung zur Eintrittsöffnung 2 und sind mit einem im Wesentlichen kreisförmigen Kunststoffabschluss 10 verschlossen. Der Kunststoffabschluss 10 und die Dichtung 9 stabilisieren dabei zumindest im Grundflächenbereich und Kopfflächenbereich des Kegelstumpfes die Faltungen in ihrem relativen Abstand zueinander.

Verschmutzte Rohluft RO, welche beispielsweise Staubpartikel aufweist, strömt entlang der Symmetrieachse S in die Filtereinrichtung 1 und insbesondere den Rohluftbereich 6 ein. Es ist ein vorgegebener Abstand A zwischen der Eintrittsöffnung 2 und dem Vorliegen der Grenzfläche 5 bzw. des Filtermaterials vorgesehen, so dass gefilterte Partikel 18 innerhalb des Rohluftbereiches 6 in dem Filtermantel 4 verbleiben können. Der Hauptteil der Partikel wird sich im Filtermaterial abscheiden. Durch den geeignet gewählten Abstand wird verhindert, dass die gefilterten Partikel 18 in potenziell angeschlossene und vorher laufende Luftführungen eintreten. Nach dem Durchlaufen des Filtervliesmaterials, wie dies beispielsweise durch die Pfeile L dargestellt ist, tritt die Reinluft RE in den Reinluftbereich 7 und kann über die Austrittsöffnung 3 zur Verbrennungsmaschine als Verbrennungsluft gelangen.

In der Figur 3 ist eine dritte Variante eines Filterelementes perspektivisch dargestellt. Dabei sind im Wesentlichen dieselben Elemente wie in den vorhergehenden Figuren 1 und 2 dargestellt. Das Filterelement 1 weist im Inneren eine Grenzfläche 5 aus Filtermaterial auf, die aus einem mehrfach umgestülpten Kegelmantel gebildet ist. Im Bereich der Eintrittsöffnung 2 und der Austrittsöffnung 3 ist jeweils ein Eintrittsabschnitt 11 und Austrittsabschnitt 12 vorgesehen, der geeignet ist, eine Kopplung mit entsprechenden Anschlussabschnitt 14, 15 von Luftleitern 13A, 13B des Luftleitersystems für die zu verbrennende Luft für eine Brennkraftmaschine zu koppeln. Somit fügt sich das Filterelement 1 problemlos in ein Fluid- oder Luftleitsystem, beispielsweise eines Kraftfahrzeuges ein. Durch die Verbindung eines Filterelementes 5 mit einem luftleiterähnlichen Mantelteil 4 wird der zur Verfügung stehende Bauraum in einem Kraftfahrzeug optimal ausgenutzt.

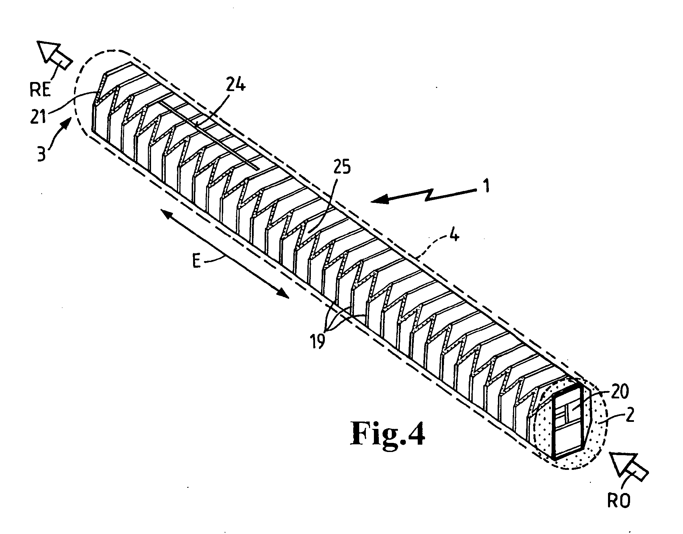

In der Figur 4 ist eine erfindungsgemäße Ausführungsform eines Filterelementes 1 perspektivisch dargestellt. Dabei ist im Inneren eines rohrförmigen Filtermantels 4 ein Filterelement 25 vorgesehen, das entlang seiner Längsausdehnung E flexibel stauch- und streckbar ist. Dies wird durch geeignete Querfaltungen 19, wie es in der Figur 4 dargestellt ist, erzielt. Einige der Querfaltungen sind über Fixiermittel 24, wie beispielsweise einem aufgeklebten Streifen aus Filtermaterial relativ zueinander fixiert. Dadurch wird verhindert, dass das zieharmonika- oder balgenförmige Filterelement 25 im Inneren des Filtermantels 4 derart zusammengedrückt wird, dass zu filternde Luft nicht mehr durch alle Filterfalten strömen kann.

Die Einströmöffnung 2 des Filtermantels 4 ist derart ausgestaltet, dass ein Öffnungsquerschnitt 20 des Filterelementes 24 als einzige Eintrittsöffnung für zu filternde Rohluft RO verbleibt. Endseitig, also zur Austrittsöffnung 3 hin, ist das stauchbare Filterelement 25 verschlossen, was durch das Bezugszeichen 21 angedeutet ist. Durch das flexible stauch- und steckbare Filterelement 25 können beliebige kurvenförmige Anordnungen des rohrförmigen Filtermantels 24 erreicht werden.

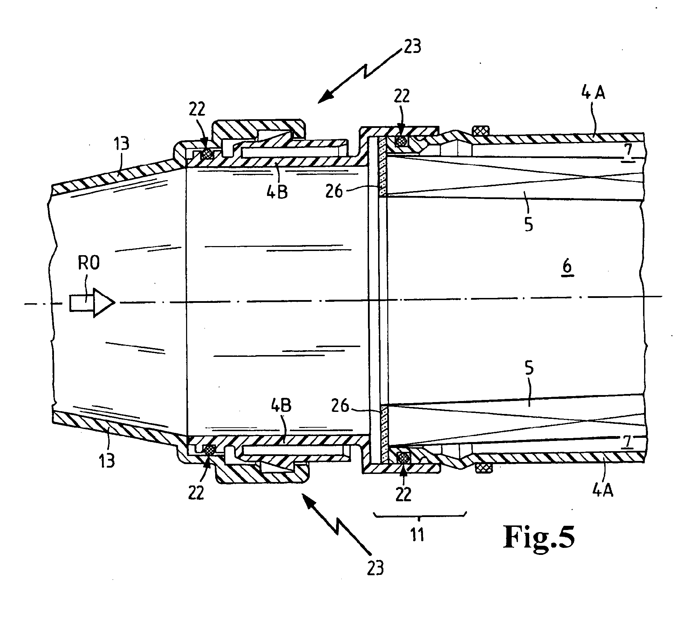

Die Figur 5 zeigt Ausführungsbeispiele für Verbindungs- oder Kopplungsmittel, beispielsweise zwischen dem Filtermantel und weiteren Luftleitern des Luftleitsystems eines Kraftfahrzeugs. Dies ist in einem Längsschnitt in der Figur 5 dargestellt.

Der Eintrittsabschnitt 11 des Filtermantels 4A ist zum Beispiel von einem den Umfang umlaufenden Dichtring 22 umschlossen, der einen luftdichten Dichtschluss zwischen der Wandung des Filtermantels 4A und einem Anschlussstück 4B, beispielsweise einer weiteren Filtereinrichtung bzw. eines weiteren Filtermantels 4B schafft. Die Grenzfläche zwischen dem Rohluftbereich 6 und dem Reinluftbereich 7 ist zum Beispiel in Figur 5 konisch in Richtung der Strömungsrichtung verjüngend dargestellt. Dabei ist zum Beispiel ein umlaufender Fuß 26 an dem Filtermaterial 5 in Richtung zur Austrittsöffnung angebracht, welcher zum Beispiel mit dem Filtermantel 4A verklebt ist.

Am Beispiel eines Zwischenstücks 4B, welches auch Teil eines Filtermantels sein kann, ist eine weitere Kopplungsmöglichkeit an einen Luftleiter 13 dargestellt. Dabei ist eine Rasteinrichtung 23 sowie ein Dichtring 22 vorgesehen, der das Zwischenstück 4B mit dem Luftleiterrohr 13 verbindet. Vorteil eines entsprechenden Schnappverschlusses ist der einfache Ausbau, zum Beispiel zu Wartungszwecken der Filtereinrichtung. Selbstverständlich sind weitere geeignete Kopplungsmittel wie zum Beispiel ein Bajonettverschluss oder aufeinander angepasste Gewindestücke ausführbar.

Obwohl die vorliegende Erfindung anhand bevorzugter Ausführungsbeispiele näher erläutert wurde, ist sie nicht darauf beschränkt, sondern vielfältig modifizierbar. Es können andere als die dargestellten Geometrien für Filterelemente oder Grenzflächen gewählt werden. Dabei können die Gegebenheiten beim Einbau des jeweiligen Filters berücksichtigt werden. Die Durchströmung der Filterleitung kann entgegen der gezeigten Beispiele auch in umgekehrter Richtung erfolgen. Die genannten Materialien für das Filterelement oder die Gehäuse sind ebenfalls nur beispielhaft zu verstehen. Neben der dargestellten Anwendungsmöglichkeit als Luftfilter für Verbrennungskraftmaschinen bzw. zur Filterung der Ansaugluft, können die vorgeschlagenen Filtereinrichtungen auch anderweitig verwendet werden, beispielsweise zur Filtration der Luft für den Fahrzeuginnenraum.

## Patentansprüche

1. Filtereinrichtung (1) zur Filterung von Verbrennungsluft in Brennkraftmaschinen oder von Luft für den Fahrzeuginnenraum mit einem als Fluidleitung geeigneten rohrförmigen Filtermantel (4), welcher zumindest eine Eintrittsöffnung (2) für zu filterndes Rohfluid (RO) und eine Austrittsöffnung (3) für gefiltertes Reinfluid (RE) aufweist, wobei in dem Innenraum des Filtermantels eine Grenzfläche (5) aus einem Filtermaterial einen Rohfluidbereich (6) von einem Reinfluidbereich (7) trennt und die Grenzfläche (5) derart ausgestaltet ist, dass das Rohfluid (RO) beim Durchströmen der Filtereinrichtung (1) zumindest teilweise radial aus dem Rohfluidbereich (6) in den Reinfluidbereich (7) tritt, wobei die Grenzfläche (5) schlauchförmig innerhalb des Filtermantels (4) ausgeführt ist, und wobei die Grenzfläche den Rohfluidbereich (6) mit einer Längsausdehnung (E) und einer Querausdehnung aus einem fluiddurchlässigen Filtermaterial bildet, und wobei der Rohfluidbereich (6) durch mehrfache Querfaltungen (19) des Filtermaterials in zumindest der Längsausdehnung (E) reversibel stauch- und / oder streckbar ist, und die Querfaltungen (19) in einem nichtverschwindenden Winkel zu der Längsausdehnungsrichtung (E) ausgebildet sind, **dadurch gekennzeichnet, dass** das Filtermaterial umlaufend und unlösbar an der Innenseite des Filtermantels (4) angebracht ist, indem der Filtermantel (4) als Blasteil hergestellt ist und das Filtermaterial in einem weiteren Verarbeitungsschritt unlösbar durch Schweißen oder Kleben daran angebracht ist, oder der Filtermantel (4) im Spritzgussverfahren hergestellt ist, wobei das Filtermaterial gleichzeitig mit eingespritzt ist.

2. Filtereinrichtung nach Anspruch 1, wobei die Grenzfläche (1) einen Öffnungsquerschnitt der Eintrittsöffnung (2) umschließt und in Richtung einer Einströmrichtung des Rohfluids (RO) kegelförmig oder kegelstumpfförmig den Reinfluidbereich (7) abschließt.

3. Filtereinrichtung (1) nach einem der Ansprüche 1 - 2, wobei die Eintrittsöffnung (2) an einen Eintrittsabschnitt (11) des Filtermantels (4) anschließt, und der Eintrittsabschnitt (11) Kopplungsmittel zum Verbinden der Filtereinrichtung (1) mit weiteren Fluidleitungen (13A) eines Fluidleitsystems aufweist.

4. Filtereinrichtung (1) nach einem der Ansprüche 1 - 3, wobei die Austrittsöffnung (3) an einen Austrittsabschnitt (12) des Filtermantels (4) anschließt, und der Austrittsabschnitt (12) Kopplungsmittel zum Verbinden der Filtereinrichtung (1) mit weiteren Fluidleitungen (13B) eines Fluidleitsystems aufweist.

5. Filtereinrichtung (1) nach einem der Ansprüche 1 - 4, wobei die Grenzfläche (5) derart in einem Abstand (A) von der Eintrittsöffnung (2) angeordnet ist, dass aus dem Rohfluid (RO) gefilterte Partikel (18) innerhalb des Filtermantels (4) verbleiben.

6. Filtereinrichtung (1) nach einem der Ansprüche 1 - 5, wobei das Filtermaterial entlang der Einströmrichtung Längsfaltungen (8) aufweist.

7. Filtereinrichtung (1) nach einem der Ansprüche 1 - 6, wobei die Grenzfläche (5) mehrere ineinander geschobene Kegelstümpfe, deren Mantel-, Deck- und / oder Grundflächen zumindest teilweise das Filtermaterial aufweisen, umfasst.

8. Filtereinrichtung (1) nach einem der Ansprüche 1 - 7, wobei die Filtereinrichtung (1) ausschließlich den Filtermantel (4) und einen geeignet gefalteten und / oder verklebten Bogen oder Bögen eines flachen faltbaren Filtervliesmaterials, welcher an dem Filtermantel (4) befestigt ist, umfasst.

9. Filtereinrichtung (1) nach einem der Ansprüche 1 - 8, wobei die Grenzfläche (5) balgenförmig entlang einer Symmetrieachse des Filtermantels umstülpbares Filtermaterial mit Querfaltungen aufweist, und das Filtermaterial mindestens einmal umgestülpt ist.

10. Filtereinrichtung (1) nach einem der Ansprüche 6 - 9, wobei Fixiermittel zur Stützung von Faltungen des Filtermaterials vorgesehen sind.

11. Filtereinrichtung (1) nach einem der Ansprüche 1 - 10, wobei die Form der Grenzflächen (5) und / oder Faltungen (8) durch Stützmittel stabilisiert ist.

## Claims

1. Filtering device (1) for filtering combustion air in internal combustion engines or air for the vehicle passenger compartment with a tubular filter casing (4) suitable as fluid line, which features at least an inlet opening (2) for raw fluid (RO) to be filtered and an outlet opening (3) for filtered clean fluid (RE), wherein in the interior space of the filter casing a boundary surface (5) made of a filter material separates a raw fluid area (6) from a clean fluid area (7) and the boundary surface (5) is designed in such a way that the raw fluid (RO) leaves at least partially radially the raw fluid area (6) to enter the clean fluid area (7) when flowing through the filtering device (1), wherein the boundary surface (5) has a tubular design inside of the filter casing (4), and wherein the boundary surface forms the raw fluid area (6) by means of a longitudinal extension (E) and a transverse extension made of a fluid-permeable filter material, and wherein the raw fluid area (6) is reversibly compressible and / or stretchable by several transverse folds (19) of the filter material in at least the longitudinal extension (E), and the transverse folds (19) are realized in a non-zero angle in relation to the longitudinal extension direction (E), **characterized in that** the filter material is attached circumferentially and undetachably on the interior side of the filter casing (4) by manufacturing the filter casing (4) as blow-molded part and that the filter material is attached thereon undetachably in a further process step by welding or gluing, or that the filter casing (4) is manufactured in the injection molding process, wherein the filter material is injected at the same time.

2. Filtering device according to claim 1, wherein the boundary surface (1) encompasses an opening cross section of the inlet opening (2) and closes in the direction of an inflow direction of the raw fluid (RO) the clean fluid area (7) in a cone-shaped or frustrum-shaped manner.

3. Filtering device (1) according to one of the claims 1 - 2, wherein the inlet opening (2) joins an inlet section (11) of the filter casing (4), and the inlet section (11) features coupling means for connecting the filtering device (1) with further fluid lines (13A) of a fluid guiding system.

4. Filtering device (1) according to one of the claims 1 - 3, wherein the outlet opening (3) joins an outlet section (12) of the filter casing (4) and the outlet section (12) features coupling means for connecting the filtering device (1) with further fluid lines (13B) of a fluid guiding system.

5. Filtering device (1) according to one of the claims 1 - 4, wherein the boundary surface (5) is disposed at a distance (A) from the inlet opening (2) in such a way that particles (18) filtered from the raw fluid (RO) remain within the filter casing (4).

6. Filtering device (1) according to one of the claims 1 - 5, wherein the filter material features longitudinal folds (8) along the inflow direction.

7. Filtering device (1) according to one of the claims 1 - 6, wherein the boundary surface (5) comprises several telescoped truncated cones, the outer surfaces, support surfaces and / or base surfaces of which feature at least partially the filter material.

8. Filtering device (1) according to one of the claims 1 - 7, wherein the filtering device (1) comprises exclusively the filter casing (4) and an appropriately folded and / or glued sheet or sheets of a flat, foldable filter fleece material which is attached to the filter casing (4).

9. Filtering device (1) according to one of the claims 1 - 8, wherein the boundary surface (5) features, in the shape of bellows, along a symmetry axis of the filter casing an invertible filter material with transverse folds, and the filter material is inverted at least once.

10. Filtering device (1) according to one of the claims 6 - 9, wherein fasteners are provided for supporting folds of the filter material.

11. Filtering device (1) according to one of the claims 1 - 10, wherein the shape of the boundary surfaces (5) and / or the folds (8) is stabilized by support means.

## Revendications

1. Dispositif de filtration (1) destiné à la filtration d'air de combustion dans des moteurs à combustion interne ou d'air pour l'habitacle intérieur de véhicules, avec une enveloppe de filtre (4) tubulaire pouvant faire office de conduite de fluide qui présente au moins une ouverture d'entrée (2) pour le fluide brut à filtrer (RO) et une ouverture de sortie (3) pour le fluide pur filtré (RE), une surface de séparation (5) constituée d'un matériau filtrant séparant, à l'intérieur de l'enveloppe de filtre, une zone à fluide brut (6) d'une zone à fluide pur (7) et la surface de séparation (5) étant conçue de manière à ce que le fluide brut (RO), lorsqu'il traverse le dispositif de filtration (1), passe en partie en sens radial de la zone à fluide brut (6) à la zone à fluide pur (7), la surface de séparation (5) étant exécutée en forme de tuyau à l'intérieur de l'enveloppe de filtre (4) et la surface de séparation formant la zone à fluide brut (6) avec une extension longitudinale (E) et une extension transversale faites d'un matériau filtrant perméable aux fluides, et la zone à fluide brut (6) étant constituée avec plusieurs plis transversaux (19) du matériau filtrant, au moins dans l'extension longitudinale (E), de manière à pouvoir être comprimée et/ou étirée de manière réversible, et les plis transversaux (19) étant formés selon un angle non nul par rapport au sens de l'extension longitudinale (E), **caractérisé en ce que** le matériau filtrant est monté de manière circulaire et non amovible sur la face intérieure de l'enveloppe de filtre (4) par le fait que l'enveloppe de filtre (4) est fabriquée en tant que pièce soufflée et que le matériau filtrant est monté dessus, lors d'une opération supplémentaire, de manière fixe par soudage ou collage ou que l'enveloppe de filtre (4) est fabriquée par moulage par injection, le matériau filtrant y étant simultanément injecté.

2. Dispositif de filtration selon la revendication 1, la surface de séparation (1) enrobant une section d'ouverture de l'ouverture d'entrée (2) et obturant la zone à fluide pur (7), en direction du sens d'entrée du fluide brut (RO), en forme de cône ou de cône tronqué.

3. Dispositif de filtration (1) selon l'une des revendications 1 à 2, l'ouverture d'entrée (2) étant adjacente à une section d'entrée (11) de l'enveloppe de filtre (4) et la section d'entrée (11) présentant des éléments de liaison permettant de raccorder le dispositif de filtration (1) à d'autres conduites de fluides (13A) d'un système de conduite de fluides.

4. Dispositif de filtration (1) selon l'une des revendications 1 à 3, l'ouverture de sortie (3) étant adjacente à une section de sortie (12) de l'enveloppe de filtre (4) et la section de sortie (12) présentant des éléments de liaison permettant de raccorder le dispositif de filtration (1) à d'autres conduites de fluides (13B) d'un système de conduite de fluides.

5. Dispositif de filtration (1) selon l'une des revendications 1 à 4, la surface de séparation (5) étant disposée à une distance (A) de l'ouverture d'entrée (2) de manière à ce que des particules (18) filtrées du fluide brut (RO) restent à l'intérieur de l'enveloppe de filter (4).

6. Dispositif de filtration (1) selon l'une des revendications 1 à 5, le matériau filtrant présentant des plis longitudinaux (8) le long du sens d'entrée.

7. Dispositif de filtration (1) selon l'une des revendications 1 à 6, la surface de séparation (5) comprenant plusieurs cônes tronqués glissés les uns dans les autres dont les surfaces d'enveloppe, de couverture et/ou de base présentent, au moins en partie, le matériau filtrant.

8. Dispositif de filtration (1) selon l'une des revendications 1 à 7, le dispositif de filtration (1) comprenant exclusivement l'enveloppe de filtre (4) et un ou plusieurs feuilles pliées et/ou collées de façon appropriée constituées d'un matériau non tissé filtrant pliant plat qui est fixé sur l'enveloppe de filtre (4).

9. Dispositif de filtration (1) selon l'une des revendications 1 à 8, la surface de séparation (5) présentant, en forme de soufflet, le long d'un axe de symétrie de l'enveloppe de filtre, un matériau filtrant avec des plis transversaux pouvant être renversé, et le matériau filtrant étant renversé au moins une fois.

10. Dispositif de filtration (1) selon l'une des revendications 6 à 9, des éléments de fixation étant prévus pour soutenir les plis du matériau filtrant.

11. Dispositif de filtration (1) selon l'une des revendications 1 à 10, la forme des surfaces de séparation (5) et/ou des plis (8) étant stabilisée par des éléments de soutien.
